# EUROPEAN PATENT APPLICATION

(11) **EP 2 996 343 A1**
(43) Date of publication of application: **16.03.2016**
(21) Application number: 14306402.0
(22) Date of filing: 12.09.2014
(51) Int. Cl.: H04N 21/218, H04N 21/472, H04N 21/2225, H04N 21/24

(54) **Method for transmitting a plurality of TV programs from a head-end device towards a client device, a related system and devices**

(71) Applicant: ALCATEL LUCENT, 92100 Boulogne-Billancourt (FR)
(72) Inventor: Van Leekwijck, Werner, 2018 Antwerpen (BE); De Schepper, Koen, 2018 Edegem (BE)
(74) Representative: ALU Antw Patent Attorneys

(57) **Abstract**

The present invention relates to a method, system and related devices for transmitting a plurality of programs from a head-end device towards a client device of a plurality of client devices, for playing out programs of said plurality of programs at request of said client device, by said client device, wherein said head-end device being coupled over a first communications network to an edge caching device and wherein said edge caching device is coupled to each client device of said plurality of client devices over a second communications network, and wherein said method first comprises the steps of said head-end device transmitting, during a first predefined period, a first block of a plurality of blocks towards said edge caching device for storage of said first block at a cache of said edge caching device, said first block comprising a first set of programs succeeded by said edge caching device transmitting from said cache, during a subsequent adjacent second predefined period, a program of said first set of programs comprised by said first block at request to said client device and said head-end device transmitting, during said subsequent adjacent second predefined period, a second subsequent block of said plurality of blocks towards said edge caching device for caching said subsequent second block in a cache of said edge caching device, said subsequent block comprising a second set of programs

## Description

### FIELD OF THE INVENTION

The present invention relates to the field of Internet Protocol Television.

### TECHNICAL BACKGROUND OF THE INVENTION

Current Internet Protocol Television (IPTV) systems typically use IP multicast for highly scalable and low-latency delivery of linear TV, i.e. users are synchronously viewing scheduled programs), complemented by a VOD (Video On Demand) system to access a catalogue of movies. Linear TV in fact is a Television service where the viewer only is able to watch a scheduled TV program at the particular time it is offered, and at the particular channel it is presented on. These video streams are typically are transported over a managed IP network to the home, and in-house, the service may be delivered via Ethernet or a dedicated Wireless LAN towards STB (Set Top Box) devices, which are responsible for terminating the video stream transport.

Moreover, End-user video consumption patterns and requirements are changing, mainly in direction of time-shifting, i.e. watching programs "any time", or at least not at the time when the program is being offered on the linear TV schedule. Several services are being defined by IPTV operators: restart-TV where as long as the broadcasted program has not finished, users may tune in to watch from the start of the program, replay-TV wherein users can watch a selected set of program until N hours after the broadcast schedule, e.g. N = 36.

This linear TV in combination with time-shifting TV requires additional unicast delivery, which is disadvantageous in that it requires a very high bandwidth in the communications network between head-end and client devices.

### SUMMARY OF THE INVENTION

An objective of embodiments of the present invention is to provide with a method, a system and related devices for transmitting a plurality of programs from a head-end device towards a client device having an improved bandwidth usage.

According to an aspect of the invention, there is provided a method for transmitting a plurality of programs from a head-end device towards a client device of a plurality of client devices for playing out programs of said plurality of programs at request of said client device, by said client device, wherein said head-end device being coupled over a first communications network to an edge caching device and wherein said edge caching device is coupled to each client device of said plurality of client devices over a second communications network, and wherein said method comprises the steps of:
- . said head-end device transmitting, during a first predefined period, a first block of a plurality of blocks towards said edge caching device for storage of said first block at a cache of said edge caching device, said first block comprising a first set of programs; and
- . said edge caching device transmitting from said cache, during a subsequent adjacent second predefined period, a program of said first set of programs comprised by said first block at request to said client device; and
- . said head-end device transmitting, during said subsequent adjacent second predefined period, a second subsequent block of said plurality of blocks towards said edge caching device for caching said subsequent second block in a cache of said edge caching device, said subsequent block comprising a second set of programs.

Still further embodiments of the present invention relate to a system configured to transmit a plurality of programs from a head-end device towards a client device of a plurality of client devices, for playing out programs of said plurality of programs at request of said client device, by said client device , wherein said system comprises said head-end device that is coupled over a first communications network to an edge caching device where said edge caching device is coupled to each client device of said plurality of client devices over a second communications network, wherein said system further comprises:
- . a block transmitting means in said head-end device, configured to transmit, during a first predefined period, a first block of a plurality of blocks towards said edge caching device for storage of said first block in a caching means of said edge caching device, said first block comprising a first set of programs; and
- . a program transmitting means in said edge caching device, configured to transmit from said caching means, during a subsequent adjacent second predefined period, a program of said first set of programs comprised by said first block at request to said client device; and wherein
- . said block transmitting means further being configured to transmit, during said subsequent adjacent second predefined period, a second subsequent block of said plurality of blocks towards said edge caching device for caching said subsequent second block in a cache of said edge caching device (ECD), said subsequent block comprising a second set of programs.

Another embodiment of the present invention relates to a Head-end device for use in a system according to claim 5, said head-end device being configured to transmit a plurality of programs towards a client device of a plurality of client devices, for playing out programs of said plurality of programs at request of said client device by said client device, wherein said head-end device being coupled over a first communications network to an edge caching device, and wherein said head-end device comprises:
- . a block transmitting means, configured to transmit, during a first predefined period, a first block of a plurality of blocks towards said edge caching device for storage of said first block in a caching means of said edge caching device, said first block comprising a first set of programs, and

Wherein said block transmitting means further is configured to transmit, during said subsequent adjacent second predefined period, a second subsequent block of said plurality of blocks towards said edge caching device for caching said subsequent second block in a cache of said edge caching device, said subsequent block comprising a second set of programs.

Still another embodiment of the present invention relates to an Edge caching device, for use in a system according to claim 5, said edge caching device further comprises:
- . a block reception means , configured to receive, during a first predefined period, a first block of a plurality of blocks from said head-end device said first block comprising a first set of programs; and
- . a caching means configured to store said first block of said plurality of blocks; and
- . a program transmitting means, configured to transmit from said caching means, during a subsequent adjacent second predefined period, a program of said first set of programs comprised by said first block at request to said client device; and
wherein said block reception means further being configured to receive, during said subsequent adjacent second predefined period, a second subsequent block of said plurality of blocks from said head-end device for caching said subsequent second block in a cache of said edge caching device, said subsequent block comprising a second set of programs; and
wherein said caching means further is configured to store said second block of said plurality of blocks.

Another embodiment of the present invention relates to a Client device for use in a system according to claim 5, wherein said client device comprises a program requesting means, configured to request a program of a first set of programs comprised by said first block, from an Electronic program guide configured to present said first set of programs comprised by said first block, said Electronic program guide executed by a client device of said plurality of client devices.

Another embodiments of the present invention relates to an Electronic Program Guide for use in method according to claim 3.

In this way, by coupling each client device of the plurality of client devices to the head-end device via an edge caching device, and additionally by the head-end device transmitting, during a first predefined period, a first block of a plurality of blocks towards an edge caching device for storage of the first block at a caching means included in the edge caching device, where the first block comprises a first set of TV programs, such as multimedia assets, followed by the edge caching device, during a subsequent adjacent second predefined period, transmitting from the caching means of the edge caching device, a TV program from the first set of TV programs which are comprised by said first block at request to the requesting client device for play out by the requesting client device and the head-end device during this second predefined period, transmits a second subsequent block of the plurality of blocks towards the edge caching device for caching the subsequent second block at a caching means of the edge caching device where the subsequent block comprises a second set of TV programs such as multimedia assets meant for play out during a third subsequent predefined period.

In this way the bandwidth of the communications network between the head-end device and the edge caching device is used, during a first phase, i.e. the first predefined period of time, for first loading a caching means at an edge caching device. In a second phase, i.e. the subsequent adjacent second predefined period of time, the edge caching device comprises all programs of a first block in the caching means which programs are available for transmitting towards a client device at request of the client device. In this second phase, the available bandwidth between the head-end device and the edge caching device is used for loading all programs comprised by a subsequent block, i.e. the second block in the caching means of the edge caching device so that each of these programs comprised by the second block, are available at the caching means of the edge caching device during a subsequent and adjacent third predefined period of time for play out by a requesting client device.

Hence, the bandwidth between the head-end device and the edge caching device, during a first phase is optimum used by loading a block into cache of such edge caching device, so that all programs of this block are available for transmission to a requesting client device in a second phase, in which second phase additionally the bandwidth between the head-end device and the edge caching device is used for loading a subsequent second block into cache, which second block is stored besides the first block at the edge caching device.

TV programs may include Multimedia assets such as live television program or feeds.

The programs of the first set of programs may or may not include same programs where in case same programs in subsequent blocks are incorporated, such program may be an alternative choice for selecting the program at a completely different time.

It is advantageous, in that at least during the second predefined period of time, the edge caching device comprises all programs of a first block in the caching means which programs are available for transmitting towards a client device at request of the client device, meaning that during the entire second period of time all programs of the first set can be requested and viewed at any time a user desires to see this program due to the availability in cache of the first set of programs in this period of time.

The described embodiments of the present invention deal with the above method, system and related devices on a per channel basis meaning that for each channel a sequence of blocks, where each block comprises a set of programs.

In an embodiment of the present invention, the edge caching device transmits from the caching means of the edge caching device, during said subsequent adjacent third predefined period, a program of said second set of programs comprised by said second block at request to said requesting client device. Such request may be performed by a user of the client device e.g. by selecting the meant program from the corresponding block as presented by the electronic program guide.

Further, it is advantageous, in that at least during the third predefined period of time, the edge caching device comprises all programs of a second block in the caching means which programs of the second set of programs are available for transmitting towards a client device at request of the client device, meaning that during the entire third period of time all programs of the second set can be requested and viewed at any time a user desires to see a program included in this second set of programs due to the continued availability in cache of the second set of programs in this period of time.

In another embodiment, a program of a set of programs comprised by a block of the plurality of blocks is requested from an Electronic program guide presenting each block of the plurality of blocks, and in addition the set of programs comprised by each such block, where the Electronic program guide is executed at the set-top box or at a client device coupled to the set-top box CD.

Alternatively such Electronic program guide, further referred to as EPG, may be executed by any network element in the core network or in the cloud.

The EPG is a way to present information to the end-user on which programs are available for watching. The Electronic program guide presents all programs contained by a corresponding block now being available in the caching means and as a consequence available for viewing by the user of a client device and in addition the electronic program guide reflects when these programs are available for requesting and subsequent viewing,

Basically, at any point in time, the end-user can watch everything but nothing else than what is in the cache.

Such Electronic Program Guide presents for each of the blocks of the plurality of blocks a corresponding set of programs that is available during the period of time the means block is stored in the caching means of the edge caching device. A user of a client device is able to request such a program of a set of programs available from this electronic program guide.

In still another embodiment of the present invention, the first block of a plurality of blocks is stored at a first cache of said edge caching device ECD and a second subsequent block B2 of said plurality of blocks is stored in a second cache of said edge caching device ECD.

During the first predefined period Pe1, a first block of a plurality of blocks is transmitted towards the edge caching device ECD for storage of said first block at the first caching means CM1 where this first block at least may be available during a subsequent adjacent second predefined period wherein programs from this block are available for being transmitted towards a client device at request thereof. Further, during the second predefined period Pe2, a second block of a plurality of blocks is transmitted towards the edge caching device ECD for storage of the second block at the second caching means CM2 where this second block at least may be available during a subsequent adjacent third predefined period Pe3 wherein programs from this block are available for being transmitted towards a client device at request thereof.

In still another embodiment of the present invention, each predefined period associated with respective blocks B1, B2, B3, ..., Bx is defined based on the size of the block to be transmitted and the bandwidth of the communications network coupling the head-end device and the edge caching device. The Maximum block size may be the product of the bandwidth of the communications network and the total duration of a predetermined time period or the other way around, the predetermined time is based on the bandwidth of the communications network coupling the head-end device and the edge caching device and the size of the corresponding Block to be transmitted from the head-end device towards the edge caching device.

The effects and advantages of the apparatus and systems according to embodiments of the present invention are substantially the same, *mutatis mutandis,* as those of the corresponding methods according to embodiments of the present inventions.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. This means that there exists a path between an output of A and an input of B which may be a path including other devices or means.

### BRIEF DESCRIPTION OF THE DRAWINGS

The above and other objects and features of the invention will become more apparent and the invention itself will be best understood by referring to the following description of an embodiment taken in conjunction with the accompanying drawings wherein:
Fig. 1 represents the functional structure of a system configured to transmit a plurality of programs from a head-end device HED towards a client device CD of a plurality of client devices CD, CD1, .. ,CDx; and

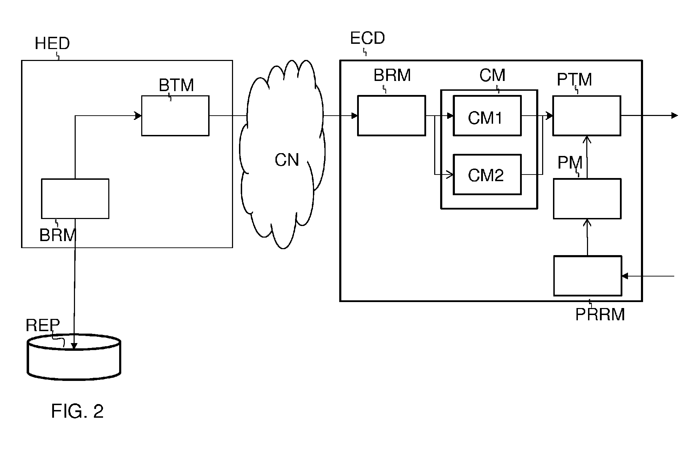

Fig. 2 represents a functional structure of the head-end device HED and the functional structure of the Edge caching device ECD; and

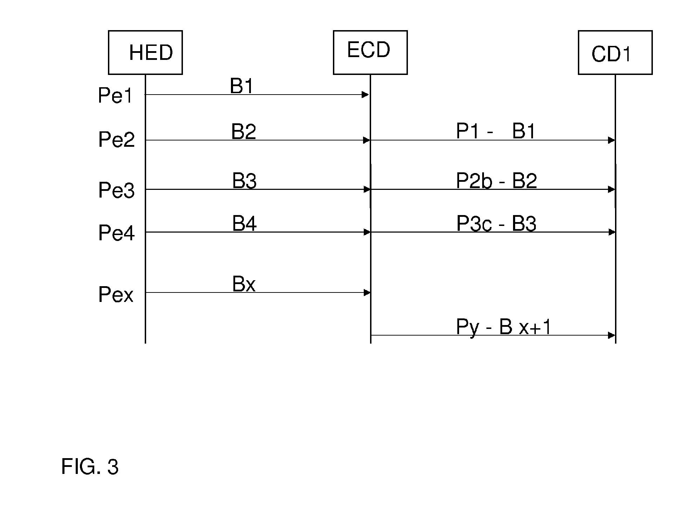

Fig.3 represents a chart demonstrating the flow of blocks and corresponding programs transmitted from head-end device HED via edge caching device ECD towards respective client device CD1.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

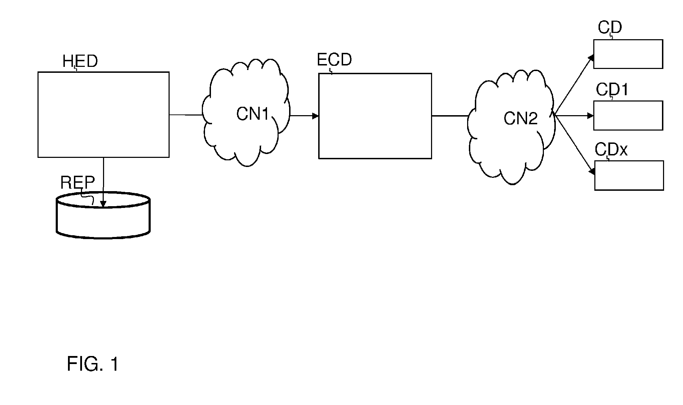

In the following paragraphs, referring to the drawing in FIG.1, an implementation of the system configured to transmit a plurality of programs from a head-end device HED towards a client device CD of a plurality of client devices CD, CD1, .. ,CDx, according to an embodiment of the present invention is described. In the first paragraph, the elements of the meant system in Fig. 1 are described, and in a further paragraph, all connections between mentioned elements are defined.

Subsequently all relevant functional means of the mentioned head-end device HED and edge caching device ECD of this system as presented in FIG.1 are described followed by a description of all interconnections.

In the succeeding paragraph the actual execution of the system is described.

A first essential element of the system is the head-end device HED that is configured to transmit a plurality of programs from a coupled repository towards a client device CD of a plurality of client devices CD, CD1, .. ,CDx.

The head-end device HED may be any kind of server, but typically may be a server farm, cloud-based server or any other kind of suitable server.

A further essential element of the present invention is an edge caching device ECD that is configured to receive transmitted blocks comprising a set of programs, store such a received block and at request transmit a program from such set of programs included in such block. Such an edge caching device may be a network element close to customer premises like access nodes, IP routers, distributed cloud nodes, home gateways or home routers.

Finally, the system comprises a plurality of client devices CD, CD1, .. ,CDx being devices like an IPTV connected television set coupled via a set-top box to the internet, where this device again is equipped with a screen with a set of speakers for rendering a multimedia asset streamed, or alternatively may be a connected television, a tablet PC, other PC such as a fixed PC or laptop PC, smart phone, a TV connected to a Kinect sensor and/or to a gamepad or joystick, or a gaming console etc.

Further it is to be remarked that although not presented in the drawings, for reasons of simplicity of the description, the system of the present invention usually comprises a plurality of edge caching device having the same structure and functional means as edge caching device ECD which is also the case for the client devices CD", CD1", .. ,CDx" that in turn have a similar structure and functional means as respective client devices CD, CD1, .. , CDx.

The head-end device HED being coupled over a first communications network CN1 where such first communications network may comprise a concatenation of a core internet network and other suitable communications network etc.

Further the edge caching device ECD being coupled over a second communications network CN2 where such first communications network may comprise a concatenation of an access network such as a digital subscriber line access network with coupled DSL modems or a cable network, a mobile communication access network with connected Smartphone or tablet devices or any other suitable communications network etc.

The Head-end device HED comprises a block transmitting means BTM that is configured to transmit, during a first predefined period, a first block of a plurality of blocks towards said edge caching device ECD for storage of said first block in a caching means of said edge caching device ECD, said first block comprising a first set of programs, and to transmit, during said subsequent adjacent second predefined period, a second subsequent block B2 of said plurality of blocks towards said edge caching device ECD for caching said subsequent second block in a cache of said edge caching device ECD, where the subsequent block comprises a second set of programs.

The head-end device further may comprise a block retrieving means BRM that is configured to retrieve a blocks of a plurality of blocks from a coupled program repository REP.

Further there is a program repository REP that is configured to hold blocks of a plurality of blocks where each block comprises a set of programs.

A television provider that provides blocks may provide either, Channel time blocks comprising instead of a linear list of programs, a linear list of blocks of programs. The viewer may select any (but only) from the current block. Such IPTV provider can use blocks to provide alternative choices, but also to offer time-shift by scheduling a program in different blocks (e.g. today in the 20.00-22.00 block, and tomorrow in the 18.00-20.00 block and the 22.00-24.00 block) or Provider time blocks: currently a single content provider may offer multiple linear channels. In this model of the embodiment of the present invention, all programs are put together in a single block-based offering. Providers can also group or filter block offerings either per channel, or also per type over the different channels (news, sports, drama, nature, romantic films, humor, horror, ...).

The block retrieving means BRM has an input-terminal that is at the same time an input-terminal 10 of the head-end device HED and further is coupled with an output to an input of the block transmitting means BTM. The block transmitting means BTM further has an output-terminal that is at the same time an output-terminal of the head-end device HED.

The Edge caching device ECD further comprises a block reception means BRM that is configured to receive, during a first predefined period, a first block of a plurality of blocks from said head-end device HED where the first block comprises a first set of programs and a caching means CM that is configured to store the first block of said plurality of blocks and additionally is configured to store said second block of said plurality of blocks. The caching means CM comprises a first caching means CM1 that is configured to store said first block of a plurality of blocks and a second caching means CM2, configured to store a second subsequent block B2 of the plurality of blocks.

The edge caching device ECD further comprises a program transmitting means PTM that is configured to transmit from said caching means, during a subsequent adjacent second predefined period, a program of said first set of programs comprised by said first block at request to said client device CD. The block reception means BRM further is configured to receive, during said subsequent adjacent second predefined period, a second subsequent block B2 of said plurality of blocks from said head-end device HED for caching said subsequent second block in a cache of said edge caching device ECD, said subsequent block comprising a second set of programs.

Moreover, the edge caching device ECD comprises a program request reception means PRRM that is configured to receive a program request from a coupled client device and comprises a processing means configured to determine based on a program request sent by a client device to determine the program to retrieve from the caching means CM, and optionally from the first caching means CM1 or second caching means CM2 for transmission by the program transmission means PTM.

The block reception means BRM of the edge caching device ECD has an input-terminal that is at the same time an input-terminal 10 of the edge caching device ECD and further, the block reception means BRM is coupled with an output to an input of the caching means CM that in turn is coupled with an output to an input of the program transmitting means PTM. The program transmitting means PTM further has an output-terminal that is at the same time an output-terminal of the edge caching device ECD.

Further, the a program request reception means PRRM has an input-terminal that is at the same time an input-terminal of the edge caching device ECD, and is additionally coupled with an output to an input of the processing means PM that is coupled with an output to an input of the program transmitting means PTM. Both the first caching means as the second caching means are coupled with an input to the output of the block reception means BRM and coupled with an output to an input of the program transmission means PTM.

The Client device CD comprises a program requesting means PRM that is configured to request a program of a first set of programs comprised by said first block, from an Electronic program guide that is configured to present the first set of programs comprised by said first block, said Electronic program guide executed at the set-top box or at a client device coupled to the set-top box CD.

Alternatively such Electronic program guide, further referred to as EPG, may be executed by any network element in the core network or in the cloud.

In order to explain the present invention first it is assumed that that the repository REP contains a plurality of blocks where each block contains a set of programs, the first block contains programs P1, P2, P3, P4, P5, ....., Px where these programs respectively may be a news-, a sports-, drama- , nature- , a romantic films, humor- , horror - program. The second block contains programs P1b, P2b, P3b, P4b, P5b, ....., Pxb where these programs respectively may entails a news-, a sports-, drama- , nature- , a romantic films, humor- , horror - program.

The head-end device HED transmits a plurality of programs towards a client device CD of a plurality of client devices CD, CD1, .. ,CDx, for playing out programs of said plurality of programs at request of said client device CD, by said client device CD-.

First, the block retrieving means BRM does retrieve for a certain TV- channel a first block B1 from the repository REP. Block B1 is fetched from the repository and by means of the block transmitting means BTM transmitted, during a first predefined period, towards the edge caching device ECD for storage of the first block in a caching means of said edge caching device ECD. The first block comprises a first set of programs, i.e. the first block contains programs P1, P2, P3, P4, P5, ....., Pox where these programs respectively may be a news-, a sports-, drama- , nature- , a romantic films, humor- , horror - program.

Subsequently, the block reception means BRM of the Edge caching device ECD, receives, during the first predefined period, the first block of a plurality of blocks from said head-end device HED where the first block which is followed by storing the received first block B1 in the caching means CM.

The first block B1 may be stored at the first caching means CM1 of the caching means CM. At latest at the end of the first predefined period, the entire block B1 is present in the first caching means CM1. An electronic program guide running at the set-top box or at a client device coupled to the set-top box CD, shows all programs that are included in the firsts block and hence all programs being available for watching by the users of the respective client devices CD, CD1, .. ,CDx.

Now it is assumed that, during a subsequent adjacent second predefined period, a user associated with client device CD1 requests program P1 being a news program by selecting the program P1 at the electronic program guide. The request for program P1 from block 1 is sent towards the edge caching device ECD which request is received by the program request reception means PRRM. The program request received at the program request reception means PRRM is used by the processing means PM for selecting program P1 from the caching means CM1 and for instructing the program transmitting means PTM to transmit program P1 from said caching means towards client device CD1.

Block B1, with corresponding programs P1, P2, P3, P4, P5, ....., Px is available during the subsequent adjacent second predefined period only and hence during this period only, programs can be requested by any of the client devices CD, CD1, .. ,CDx.

In the mean time, during this subsequent adjacent second predefined period Pe2, the block retrieving means BRM at the head-end device HED does retrieve for the same TV- channel a second block B2 from the repository REP. Block B2 is fetched from the repository and by means of the block transmitting means BTM transmitted, during a second predefined period Pe2, towards the edge caching device ECD for storage of the first block in a caching means of the edge caching device ECD. The second block comprises a second set of programs, i.e. the second block contains programs P1 b, P2b, P3b, P4b, P5b, ....., Pxb where these programs again respectively may be a news-, a sports-, drama- , nature- , a romantic films, humor- , horror - program.

Subsequently, the block reception means BRM of the Edge caching device ECD, receives, during the second predefined period, the second block B2 of a plurality of blocks from said head-end device HED where the second block which is followed by storing the received second block B2 in the caching means CM.

The second block B2 may be stored at the second caching means CM2 of the caching means CM. At latest at the end of the second predefined period, the entire block B2 is present at the second caching means CM2. An electronic program guide also shows all programs that are included in the second block B2 and hence all programs are being available for watching by the users of the respective client devices CD, CD1, .. ,CDx during a third predefined period of time Pe3 are shown by the Electronic Program Guide.

Again, it is assumed that, during a subsequent adjacent third predefined period Pe3, a user associated with client device CD1 requests program P2b being a sports program by selecting the program P2b at the electronic program guide. The request for program P2b from block 2 is sent towards the edge caching device ECD which request is received by the program request reception means PRRM. The program request received at the program request reception means PRRM is used by the processing means PM for selecting program P2b from the caching means CM2 and for instructing the program transmitting means PTM to transmit program P2b from the caching means towards client device CD1.

Further, during this subsequent adjacent third predefined period, the block retrieving means BRM at the head-end device HED does retrieve for the same TV-channel a third block B3 from the repository REP. Block B3 is fetched from the repository and by means of the block transmitting means BTM transmitted, during a third predefined period, towards the edge caching device ECD for storage of the third block B3 in a caching means of the edge caching device ECD. The third block comprises a third set of programs, i.e. the third block contains programs P1c, P2c, P3c, P4c, P5c, ....., Pxc where these programs respectively may be a news-, a sports-, drama- , nature-, a romantic films, humor- , horror - program.

Subsequently, the block reception means BRM of the Edge caching device ECD, receives, during the third predefined period, the third block B3 of a plurality of blocks from the head-end device HED, which receiving is followed by storing the received third block B3 in the caching means CM.

The third block B3 may be stored at the first caching means CM1 of the caching means CM overwriting the first block B1. At latest at the end of the third predefined period, the entire block B3 is present in the first caching means CM1. An electronic program guide running at the set-top box or at a client device coupled to the set-top box CD shows all programs that are included in the third block and hence all programs being available for watching by the users of the respective client devices CD, CD1, .. ,CDx during the fourth predefined period of time.

The first and second caching means CM1, CM2 may be applied for alternately receiving subsequent blocks of a plurality of blocks and holding such block for a predefined period of time after which a new subsequent block is loaded in each of the respective caching means CM1, CM2.

The previous embodiment describes a situation on a per channel basis meaning that a system of the present invention additionally may have a plurality of channels, where for each channel of the plurality of channels a sequence of such blocks, where each block contains a set of programs.

It is to be noted that, each predefined period B1, B2, B3, ..., Bx is defined based on the size of the block to be transmitted and the bandwidth of the communications network coupling the head-end device and the edge caching device. The Maximum block size may be the product of the bandwidth of the communications network and the total duration of a predetermined time period or the other way around, the predetermined time is based on the bandwidth of the communications network coupling the head-end device and the edge caching device and the size of the corresponding Block to be transmitted from the head-end device towards the edge caching device. The product of bandwidth and duration of a block determines the amount of content in the block that can be refreshed at each period. The total block size can be bigger if certain programs (content) is left in the cache for more than 1 period. (if sufficient storage is available).

Moreover, periods of time Pe1, Pe2, Pe3, ...Pex must not have an equal duration but may have a different duration.

During period Pe1, content is transmitted to the caching means. During time period Pe2, on one hand the clients are able to view content from the cache and on the other hand the content for the next period is transmitted already from the head-end device towards the cache.

Further it is to be noted that in case of a live feed containing live content or real-time program this content being available during the predefined period of time Pe2 which may be viewed by the client immediately. In this situation the live program is streamed during the period the live stream is available, i.e. during period Pe2. In order to provision the content of block B3 that in the situation of non real-time or live programs usually would be transmitted from the head end device HED towards the edge caching device ECD, during time period Pe2 now is transmitted during period Pe1 and stored in the caching device till period Pe3, so that this block B3 is available during period Pe3 for requesting programs of the block and subsequent viewing of these programs. Hence, during time period Pe1 content for time period Pe3 i.e. of block 3 B3 is sent to the cache and during time period Pe2 the live event is transmitted directly from the head-end via the caching means towards each of the requesting clients.

Further, it is to be noted that although the embodiment describes a client-server architecture wherein the present invention is implemented and executed, this also could have been implemented and executed in a peer-to-peer architecture, cloud architecture, hardware architecture, and each other form in between.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method for transmitting a plurality of programs from a head-end device (HED) towards a client device (CD) of a plurality of client devices (CD, CD1, .. ,CDx), for playing out programs of said plurality of programs at request of said client device, by said client device (CD), wherein said head-end device (HED) being coupled over a first communications network (CN1) to an edge caching device and wherein said edge caching device (ECD) is coupled to each client device of said plurality of client devices (CD, CD1, .. ,CDx) over a second communications network (CN2), and wherein said method comprises the steps of:
- . said head-end device (HED) transmitting, during a first predefined period, a first block of a plurality of blocks towards said edge caching device (ECD) for storage of said first block at a cache of said edge caching device (ECD), said first block (B1) comprising a first set of programs; and
- . said edge caching device (ECD) transmitting from said cache, during a subsequent adjacent second predefined period, a program of said first set of programs comprised by said first block at request to said client device (CD); and
- . said head-end device (HED) transmitting, during said subsequent adjacent second predefined period, a second subsequent block (B2) of said plurality of blocks towards said edge caching device (ECD) for caching said subsequent second block in a cache of said edge caching device (ECD), said subsequent block comprising a second set of programs.

2. A method for transmitting a plurality of programs, according to claim 1, wherein said method further comprises the step of:
- said edge caching device (ECD), transmitting from said cache, during a subsequent adjacent third predefined period, a program of said second set of programs comprised by said second block at request to said requesting client device.

3. A method for transmitting a plurality of programs, according to claim 1, wherein said program of a first set of programs comprised by said first block, is requested from an Electronic program guide presenting said first set of programs comprised by said first block, and said method further comprises the step of said client device executing said Electronic program guide.

4. A method for transmitting a plurality of programs, according to claim 1, wherein said first block of a plurality of blocks is stored at a first cache of said edge caching device (ECD) and a second subsequent block (B2) of said plurality of blocks is stored at a second cache of said edge caching device (ECD).

5. System configured to transmit a plurality of programs from a head-end device (HED) towards a client device (CD) of a plurality of client devices (CD, CD1, .. ,CDx), for playing out programs of said plurality of programs at request of said client device (CD), by said client device (CD), wherein said system comprises said head-end device (HED) that is coupled over a first communications network (CN1) to an edge caching device where said edge caching device (ECD) is coupled to each client device of said plurality of client devices (CD, CD1, .. ,CDx) over a second communications network (CN2), wherein said system further comprises:
- . a block transmitting means in said head-end device (HED), configured to transmit, during a first predefined period, a first block of a plurality of blocks towards said edge caching device (ECD) for storage of said first block in a caching means of said edge caching device (ECD), said first block comprising a first set of programs; and
- . a program transmitting means in said edge caching device (ECD), configured to transmit from said caching means, during a subsequent adjacent second predefined period, a program of said first set of programs comprised by said first block at request to said client device (CD); and wherein
- . said block transmitting means further being configured to transmit, during said subsequent adjacent second predefined period, a second subsequent block (B2) of said plurality of blocks towards said edge caching device (ECD) for caching said subsequent second block in a cache of said edge caching device (ECD), said subsequent block comprising a second set of programs.

6. A system for transmitting a plurality of programs, according to claim 5, wherein said program transmitting means of said edge caching device (ECD) further is configured to transmit from said caching means, during a subsequent adjacent third predefined period, a program of said plurality of programs comprised by said second block at request to said requesting client device (CD1).

7. A system for transmitting a plurality of programs, according to claim 5, wherein said system comprises a program requesting means at said client device, configured to request a program of a first set of programs comprised by said first block, from an Electronic program guide configured to present said first set of programs comprised by said first block, said Electronic program guide executed by said client device.

8. A system for transmitting a plurality of programs, according to claim 5, wherein said system comprises:
- . a first caching means configured to store said first block of a plurality of blocks at a first cache of said edge caching device (ECD); and
- . a second caching means, configured to store a second subsequent block (B2) of said plurality of blocks at a second cache of said edge caching device (ECD).

9. Head-end device (HED) for use in a system according to claim 5, said head-end device (HED) being configured to transmit a plurality of programs towards a client device (CD) of a plurality of client devices (CD, CD1, .. ,CDx), for playing out programs of said plurality of programs at request of said client device (CD), by said client device (CD), wherein said head-end device (HED) being coupled over a first communications network (CN1) to an edge caching device (ECD), and wherein said head-end device (HED) comprises:
- . a block transmitting means (BTM), configured to transmit, during a first predefined period, a first block of a plurality of blocks towards said edge caching device (ECD) for storage of said first block in a caching means of said edge caching device (ECD), said first block comprising a first set of programs, and
wherein said block transmitting means (BTM) further is configured to transmit, during said subsequent adjacent second predefined period, a second subsequent block (B2) of said plurality of blocks towards said edge caching device (ECD) for caching said subsequent second block in a cache of said edge caching device (ECD), said subsequent block comprising a second set of programs.

10. Edge caching device (ECD), for use in a system according to claim 5, said edge caching device (ECD) further comprises:
- . a block reception means (BRM), configured to receive, during a first predefined period, a first block of a plurality of blocks from said head-end device (HED) said first block comprising a first set of programs; and
- . a caching means (CM) configured to store said first block of said plurality of blocks; and
- . a program transmitting means (PTM), configured to transmit from said caching means, during a subsequent adjacent second predefined period, a program of said first set of programs comprised by said first block at request to said client device (CD); and
wherein said block reception means (BRM) further being configured to receive, during said subsequent adjacent second predefined period, a second subsequent block (B2) of said plurality of blocks from said head-end device (HED) for caching said subsequent second block in a cache of said edge caching device (ECD), said subsequent block comprising a second set of programs; and
wherein said caching means (CM) further is configured to store said second block of said plurality of blocks.

11. An Edge caching device (ECD), according to claim 10, wherein said caching means (CM) comprises:
- . a first caching means (CM1) configured to store said first block of a plurality of blocks; and
- . a second caching means (CM2), configured to store a second subsequent block (B2) of said plurality of blocks.

12. Client device CD for use in a system according to claim 5, wherein said client device (CD) comprises a program requesting means (PRM), configured to request a program of a first set of programs comprised by said first block, from an Electronic program guide configured to present said first set of programs comprised by said first block, said Electronic program guide executed by a client device of said plurality of client devices (CD, CD1, ..,CDx).

13. Electronic Program Guide for use in method according to claim 3.
